# EUROPÄISCHE PATENTANMELDUNG

(11) **EP 4 624 189 A1**
(43) Veröffentlichungstag der Anmeldung: **01.10.2025**
(21) Anmeldenummer: 24165849.1
(22) Anmeldetag: 25.03.2024
(51) Int. Cl.: B44C 5/04, B32B 37/10, B32B 38/06, B32B 37/00, B32B 38/00

(54) **VERFAHREN UND VORRICHTUNG ZUR HERSTELLUNG EINES SCHICHTSTOFFES, INSBESONDERE EINES LAMINATES IN EINER CPL-PRESSE MIT EINER ZU EINEM DEKOR SYNCHRONEN STRUKTUR**

(71) Anmelder: Flooring Technologies Ltd., Kalkara SCM1001 (MT)
(72) Erfinder: KALWA, Norbert, 32805 Horn-Bad Meinberg (DE)
(74) Vertreter: Maikowski & Ninnemann Patentanwälte Partnerschaft mbB

(57) **Zusammenfassung**

Die Erfindung betrifft ein Verfahren zur Herstellung eines Schichtstoffes (100), insbesondere eines Laminates in einer CPL-Presse mit einer zu einem Dekor synchronen Struktur.

## Beschreibung

Die Erfindung betrifft ein Verfahren zur Herstellung eines Schichtstoffes, insbesondere eines Laminates in einer CPL-Presse mit einer zu einem Dekor synchronen Struktur, welches die folgenden Schritte aufweist:
a.
   (i) Bereitstellen mindestens einer Kraftpapierlage und einer mit einem Dekor bedruckten Dekorpapierlage; oder
   (ii) Bereitstellen mindestens einer Kraftpapierlage, einer mit einem Dekor bedruckten Dekorpapierlage und einer Overlaypapierlage;
b. Bereitstellen einer Datei aufweisend die digitalen Daten des Dekors, mit dem die Dekorpapierlage bedruckt ist;
c. Erstellen einer Datei für die Oberflächenstruktur, enthaltend die digitalen Daten der Oberflächenstruktur des Dekors, aus der Datei aufweisend die digitalen Daten des Dekors;
d. Auftragen mindestens einer Schicht Harz auf die bedruckte Dekorpapierlage im Fall a. (i); oder
   Auftragen mindestens einer Schicht Harz auf die Overlaypapierlage im Fall a. (ii);
   wobei in jedem Fall die Verteilung des Harzes durch die digitalen Daten der Datei für die Oberflächenstruktur vorgegeben wird und damit von dem auf die Dekorpapierlage aufgedrucktem Dekor abhängt;
e. Verpressen der mindestens einen Kraftpapierlage und der mit einem Dekor bedruckten Dekorpapierlage mit der mindestens einen Harzschicht mit einem Strukturgeber in einer CPL-Presse; oder
   Verpressen der mindestens einen Kraftpapierlage, der mit einem Dekor bedruckten Dekorpapierlage und der Overlaypapierlage mit der mindestens einen Harzschicht mit einem Strukturgeber in einer CPL-Presse;
   wobei in jedem Fall die Struktur des Strukturgebers durch die digitalen Daten der Datei für die Oberflächenstruktur vorgegeben wird und damit von dem auf die Dekorpapierlage gedruckten Dekor bestimmt wird;
   wobei eine Oberflächenstruktur auf dem Schichtstoff ausgebildet wird, die synchron zu dem auf der Dekorpapierlage aufgedruckten Dekor ist; und wobei ein Teil der Strukturhöhe der Oberflächenstruktur aus dem Auftrag der mindestens einen Harzschicht entsteht.

Schichtstoffe, insbesondere Laminate werden durch das Verpressen von Papierimprägnaten hergestellt. Diese Laminate können dann zum Beispiel auf Trägerplatten aufgebracht (aufkaschiert) werden.

Laminate können als Continuous Pressure Laminate (CPL) hergestellt werden. CPL werden im kontinuierlichen Verfahren aus mehreren Lagen Papier und Harz hergestellt. Es ist meist als Rollenware erhältlich und wird z. B. zur Herstellung von Arbeitsplatten, ummantelten Profilen und Türblättern verwendet. CPL werden im Durchlauf- oder Endlosverfahren in zweiseitig beheizten Rollenbandpressen, sogenannten CPL-Pressen verpresst.

Bei der Herstellung von CPL auf Doppelband-Pressen werden als Kernlage harzimprägnierte Natronkraftpapiere (NKP) eingesetzt. Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen. Die für CPL genutzten NKP werden üblicherweise mit einem Gemisch aus Melamin- und Phenolharz imprägniert. Der Harzauftrag für CPL-Kernlagen liegt hierfür üblicherweise bei 80 - 90 Gew.%.

Die Verwendung von Schichtstoffen als Laminate in der Möbelindustrie, als Fußbodenbeläge, Tischplatten oder auch zum Verkleiden von Wänden und Decken erfordert eine Bearbeitung bzw. Veredelung der Oberfläche der Schichtstoffe. Üblicherweise weisen im Fall der genannten Anwendungsgebiete die Schichtstoffe mindestens eine Kraftpapierlage und eine Dekorpapierlage auf. Zur Erhöhung der Verschleißfestigkeit kann auf der Dekorpapierlage weiterhin eine Overlaypapierlage angeordnet sein. Als Overlaypapierlage werden dünne Papier verwendet, welche typischerweise mit einem Melaminharz getränkt wurden. Zusätzlich können abriebfeste Partikel, wie zum Beispiel Korundpartikel in das Harz der Overlaypapierlage eingemischt sein, um die Abriebfestigkeit der Oberfläche des Schichtstoffes zu erhöhen.

Die Kernlage, Dekorpapierlage und optional Overlaypapierlage werden als Schichtaufbau in einer CPL-Presse zu einem Laminat verpresst. Die CPL-Kernlagen, die Dekorpapierlage und die Overlaypapierlage werden hierbei üblicherweise als Rollenware bereitgestellt. In seltenen Fällen wird mit Bogenware gearbeitet.

Bei der Herstellung von Schichtstoffen für die genannten Zwecke ist ein wesentliches Qualitätsmerkmal die gefällige Oberflächenstrukturierung. Diese sollte nicht nur dem Dekor synchron sein, sondern auch in Bezug auf die Strukturtiefen der Struktur des Dekors eine möglichst genaue Nachstellung der zu Grunde liegenden Vorlage aus der Natur oder von einem anderen Produkt sein. Es kommt vor allem auf einen möglichst originalgetreuen optischen und haptischen Eindruck der Nachbildung an. Es ist daher wünschenswert, dass die aufgeprägte Struktur auf das aufgedruckte Dekor abgestimmt ist und somit eine dekorsynchrone Struktur oder auch eine Synchronpore ausgebildet wird.

Bisher standen häufig Holzreproduktionen im Mittelpunkt des Interesses der Endverbraucher. Um ein möglichst naturgetreues Ergebnis zu erzielen, wurden bei der Herstellung die Schichtstoffe mit einfachen Porenstrukturen versehen. Dabei bewegte sich die Strukturtiefe meist unterhalb von 50µm. Für spezielle Anwendungen wie Tischplatten in Büros werden sogar flache Strukturen (Büttenstruktur) vorgeschrieben.

Durch das Aufkommen des Digitaldrucks sind nun unterschiedlichste Materialreproduktionen in das Interesse der Endverbraucher gerückt. Unter anderem sind beispielsweise Stein-, Fantasie- oder Intarsiendekore in den Fokus gerückt. Durch die neuen dekorativen Ansprüche und neuen Produkte (elastische Bodenbeläge) werden nun mehr und mehr tiefe Strukturen gefordert. Dabei sind häufig auch großflächige Einprägungen wie z. B. für Fliesenimitationen, starkstrukturierte Hölzer oder Intarsien an der Tagesordnung.

Bei der Herstellung von Schichtstoffen in einer CPL-Presse wird wie bereits beschrieben mit einem Imprägnataufbau gearbeitet (Kernlage aus Kraftpapier - bedrucktes und beharztes Dekorpapier - beharztes Overlaypapier). Eine Strukturierung ist nur für geringe Tiefen beim Verpressen mit einem Strukturgeber möglich, da Schichten bei tiefen Strukturierungen reißen, was zu qualitativ nicht einwandfreien Laminat-Produkten führt. Eine mangelfreie Qualität kann so nicht gewährleistet werden.

Die EP 2 913 199 B1 befasst sich mit dem Aufbau von haptischen Strukturen durch 3D-Druck. Dieses Verfahren ist äußerst zeitaufwendig und kann nicht für die Produktion von hohen Stückzahlen in kurzer Zeit eingesetzt werden. Das Mittel der Wahl bei der schnellen Herstellung von bedruckten Schichtstoffen sind dabei Herstellungsverfahren mit mindestens einer CPL-Presse. In einer solchen kann ein 3D-Druckverfahren jedoch nicht sinnvoll und effizient eingesetzt werden. Das Verfahren ist daher unwirtschaftlich und höchstens für kleine Stückzahlen oder zur Herstellung von Prototypen geeignet.

Die DE 10 2009 044 802 A1 offenbart ein Verfahren, in dem eine Oberflächenstruktur durch das Aufbringen von Lacktröpfchen verschiedener Größe aufgebaut wird. Um tiefe Strukturen aufzubauen, müssen mehrere Schichten von Lacktröpfchen nacheinander aufgetragen werden, wobei jede Schicht zunächst zumindest angetrocknet/angehärtet werden muss, bevor eine weitere aufgebracht wird. Das Verfahren ist damit in der Lage Strukturen mit einer Tiefe zwischen 1 µm und 3 mm zu erzeugen, die auch als Synchronporen ausgebildet sein können. Jedoch weist das Verfahren mehrere Nachteile auf:
- Eine Lackschichten muss innerhalb kürzester Zeit getrocknet/angehärtet werden, um ein Verlaufen der Tröpfchen zu verhindern;
- Die Eigenschaften der verwendeten Lacke müssen genau gesteuert und bekannt sein (Viskosität, Thixotropie);
- Lack ist ein sehr preisintensiver Rohstoff, was die Wirtschaftlichkeit in der Produktion verringert;
- Das Verfahren kann nicht in die üblichen bestehenden Produktionsprozesse eingegliedert werden. Das Aufbringen der Lackstruktur kann, ähnlich dem Aufbringen einer Struktur durch 3D-Druck, nicht in einem Herstellungsverfahren mit mindestens einer CPL-Presse erfolgen. Die Produktionsdauer wird dadurch verlängert, was die Wirtschaftlichkeit des Verfahrens enorm mindert.

Der vorliegenden Erfindung liegt daher die Aufgabe zu Grunde, die Nachteile aus dem Stand der Technik zu beheben und ein Verfahren zur Verfügung zu stellen, mit dem dekorsynchrone Strukturen von vielfältigen Dekoren in einer Taktstraße mit CPL-Presse auf einen Schichtstoff aufgebracht werden können.

Hierfür stellt die Erfindung ein Verfahren gemäß Anspruch 1 zur Herstellung eines Schichtstoffes, insbesondere eines Laminates in einer CPL-Presse mit einer zu einem Dekor synchronen Struktur bereit.

Weiterhin umfasst die vorliegende Erfindung eine Vorrichtung gemäß Anspruch 13 zum Aufbringen einer dekorsynchronen Oberflächenstruktur auf einen Schichtstoff mit dem erfindungsgemäßen Verfahren.

### Detaillierte Beschreibung

Erfindungsgemäß wird ein Verfahren zur Herstellung eines Schichtstoffes bereitgestellt. In einer Ausführungsform ist der Schichtstoff ein Laminat. Der erfindungsgemäße Schichtstoff ist insbesondere dazu geeignet bei der Herstellung von Möbelfronten, Türblättern, Arbeitsplatten, Zahltheken oder Laminatböden verwendet zu werden.

Erfindungsgemäß wird
(i) mindestens eine Kraftpapierlage und eine mit einem Dekor bedruckte Dekorpapierlage bereitgestellt; oder
(ii) mindestens eine Kraftpapierlage, eine mit einem Dekor bedruckte Dekorpapierlage und eine Overlaypapierlage bereitgestellt.

In einer Ausführungsform werden 1 bis 5 Kraftpapierlagen, bevorzugt 1 bis 3 Kraftpapierlagen, besonders bevorzugt 2 bis 3 Kraftpapierlagen zur Verfügung gestellt. Die zu Verfügung gestellten Kraftpapierlagen bilden die sogenannte Kernlage des Schichtstoffes.

Die vorliegend verwendeten Kraftpapierlagen weisen ein Gewicht zwischen 50 und 200 g/m², bevorzugt zwischen 60 und 180 g/m², besonders bevorzugt zwischen 80 und 170 g/m², wie z.B. 80 g/m², 120 g/m² oder 160 g/m² auf.

Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen. In einer bevorzugten Ausführungsform wird Natronkraftpapier (NKP) verwendet.

In einer Ausführungsform ist jede Kraftpapierlage mit einem Gemisch aus Melamin- und Phenolharzen imprägniert. Imprägniert bedeutet, dass die Kraftpapierlage mit dem Harz durchtränkt wird. Der dafür notwendige Harzauftrag liegt üblicherweise zwischen 80 - 90 Gew.% bezogen auf das Gewicht der jeweiligen Kraftpapierlage. Beispielsweise kann ein Gemisch aus Melamin- und Phenolharzen mit einem Verhältnis von 2:3 verwendet werden.

Weiterhin wird eine bedruckte Dekorpapierlage bereitgestellt. Dekorpapiere sind Spezialpapiere zur Oberflächenveredelung, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten, muss das verwendete Papier eine geeignete Glätte und Dimensionsstabilität aufweisen und ebenfalls für eine Penetration einer notwendigen Kunstharzimprägnierung geeignet sein. Der Harzauftrag bei der Imprägnierung einer Dekorpapierlage liegt bei 100 bis 120 Gew.% bezogen auf das Gewicht der Dekorpapierlage.

Erfindungsgemäß ist die Dekorpapierlage mit einem Dekor bedruckt. Das Dekor kann beispielsweise in einem Direktdruckverfahren auf die Dekorpapierlage aufgedruckt worden sein. Als Direktdruckverfahren werden insbesondere Tiefdruck- und Digitaldruckverfahren verwendet. Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand, wie zum Beispiel ein Trägermaterial, übertragen. Bei der Verwendung des indirekten Tiefdrucks werden mehrere Druckwalzen eingesetzt.

In einer bevorzugten Ausführungsform wurde das Dekor mittels Digitaldruckverfahren auf die Dekorpapierlage aufgedruckt. Beim Digitaldruck wird das Druckbild (Dekor) direkt von einem Computer in eine Druckmaschine, wie zum Beispiel einen Laserdrucker oder Tintenstrahldrucker, übertragen. Dabei entfällt die Verwendung einer statischen Druckform. Der Dekordruck erfolgt nach dem Inkjet-Prinzip im Single-Pass oder Multi-Pass bei dem die gesamte Breite der zu bedruckenden Oberseite überspannt wird, wobei die Dekorpapierlage unter dem Drucker hindurch bewegt wird. Es ist aber auch möglich, dass die Dekorpapierlage unter dem Drucker angehalten wird und dieser die Oberfläche beim Drucken mindestens einmal überfährt.

In einer Ausführungsform wird weiterhin eine Overlaypapierlage bereitgestellt. Die Overlaypapierlage ist typischerweise ein dünnes Papier. In einer bevorzugten Ausführungsform ist die Overlaypapierlage mit einem Harz imprägniert, besonders bevorzugt mit einem Melaminharz. Für die Imprägnierung von Overlaypapieren werden Harzaufträge mit bis zu 400 Gew.% Melaminharz, bezogen auf das Gewicht der Overlaypapierlage verwendet. Geeignete Overlaypapierlagen weisen ein Gewicht zwischen 20 und 50 g/m² auf.

Es sind ebenfalls Overlaypapiere erhältlich, in denen bereits abriebfeste Partikel, wie zum Beispiel Korundpartikel in das Harz zum Imprägnieren der Overlaypapierlage eingemischt sind oder diese auf die mit dem Imprägnierharz benetzte Overlaypapierlage aufgestreut werden, um die Abriebfestigkeit zu erhöhen. In einer Ausführungsform weist das Harz, mit dem das Overlaypapierlage imprägniert ist, daher abriebfeste Partikel wie zum Beispiel Korundpartikel auf. In einer weiteren Ausführungsform wurden auf die Overlaypapierlage abriebfeste Partikel, wie Korundpartikel nach dem Imprägnieren aufgestreut. Für die meisten Anwendungen (Laminate für Arbeitsplatten oder Zahltheken) reichen Overlays ohne Korund aus.

Erfindungsgemäß wird eine Datei, die die digitalen Daten des Dekors, mit dem die Dekorpapierlage bedruckt ist, bereitgestellt.

War ein analoges Dekor die Vorlage für den Dekordruck, so können von diesem durch, dem Fachmann bekannte Mittel, digitale Daten des Dekors erzeugt werden. Möglichkeiten hierfür, wie beispielsweise abfotografieren mit einer Digitalkamera, einscannen mit einem Farbscanner oder abscannen mit einem Hyperspektralscanner sind aus dem Stand der Technik hinreichend bekannt.

Wurde ein Digitaldruckverfahren zum Bedrucken der Dekorpapierlage verwendet, so liegen die digitalen Daten des gedruckten Dekors vorteilhafterweise bereits vor.

Erfindungsgemäß wird eine Datei für die Oberflächenstruktur erstellt, die die Oberflächenstruktur in Form von digitalen Daten enthält. Hierfür wird die Datei verwendet, die die digitalen Daten des Dekors, mit dem die Dekorpapierlage bedruckt ist, aufweist. Ausgehend von dieser Datei wird die Datei für die Oberflächenstruktur erstellt, die für jeden Bildpunkt des Dekors zugeordnet eine Strukturtiefe enthält und damit die digitalen Daten der Oberflächenstruktur des Dekors. Dies wird durch eine geeignete Software durchgeführt.

In einer Ausführungsform können aus den digitalen Daten des Dekors mit Hilfe einer Software wie beispielsweise PhotoShop, Paint oder PaintShop Pro die Dekordaten für die einzelnen Farbkanäle separiert werden. Die digitalen Daten der Farbkanäle enthalten wiederum Informationen über die Oberflächenstruktur. Der Farbkanal, der z. B. die Informationen über die "Holzmaserung", also dunkle Farbtöne, enthält, würde dann einen verminderten oder gar keinen Harzauftrag indizieren. Jeder Farbkanal enthält damit eine Information über die Strukturtiefe eines bestimmten Bildpunktes im Dekor. Eine Pore der Holzmaserung ist im finalen Produkt dann als Vertiefung auf der Oberfläche ausgebildet. In den digitalen Daten der Farbkanäle sind damit die Informationen über die Oberflächenstruktur enthalten und können als digitale Daten der Oberflächenstruktur dienen. In einer Ausführungsform wird daher jedem Bildpunkt des Dekors durch die digitalen Daten der Farbkanäle eine Strukturtiefe zugeordnet. In der Datei für die Oberflächenstruktur sind dann die digitalen Daten der Oberflächenstruktur durch die digitalen Daten der Farbkanäle enthalten.

Lag das auf die Dekorpapierlage gedruckte Dekor zunächst analog vor, kann in einer weiteren Ausführungsform der vorliegenden Erfindung, kann die analoge Dekorvorlage gescannt werden, um die Datei zu erzeugen, die die digitalen Daten des Dekors, mit dem die Dekorpapierlage bedruckt ist, aufweist. Aus dem Stand der Technik sind unter anderem Scanner bekannt, die 2D-Daten bzw. Daten aus verschiedenen Beleuchtungssituationen zusammensetzen. Diese Scannerdaten enthalten nicht nur Informationen über die farbliche Komposition eines Dekors, sondern auch über deren Oberflächenstruktur. Aus den Scannerdaten, die unter verschiedenen Beleuchtungssituationen aufgenommen werden, lässt sich jedem Bildpunkt eines Dekors eine Strukturtiefe zuordnen. Geeignete Scanner hierfür stellen beispielsweise die Firma METIS Systems S.r.l. und die Firma Cruse Spezialmaschinen GmbH zur Verfügung. In dieser Ausführungsform sind daher in der Datei für die Oberflächenstruktur die digitalen Daten der Oberflächenstruktur des Dekors in Form der digitalen Daten der Oberflächenstruktur enthalten, wie sie von einem geeigneten Scanner zur Verfügung gestellt werden.

Alternativ können die gescannten digitalen Daten aber auch mit Hilfe einer Software wie beispielsweise PhotoShop, Paint oder PaintShop Pro die Dekordaten für die einzelnen Farbkanäle separiert werden. Dieses Vorgehen ist bereits ausführlich beschrieben.

Erfindungsgemäß wird mindestens eine Schicht Harz auf die bedruckte Dekorpapierlage aufgetragen, wenn mindestens eine Kraftpapierlage und eine mit einem Dekor bedruckte Dekorpapierlage bereitgestellt wurden.

Erfindungsgemäß wird mindestens eine Schicht Harz auf die Overlaypapierlage aufgetragen, wenn mindestens eine Kraftpapierlage, eine mit einem Dekor bedruckte Dekorpapierlage und eine Overlaypapierlage bereitgestellt wurden.

In jedem Fall wird die Verteilung des Harzes auf der Dekorpapierlage oder der Overlaypapierlage durch die digitalen Daten der Datei für die Oberflächenstruktur vorgegeben und hängt damit von dem auf die Dekorpapierlage aufgedrucktem Dekor ab.

Die Festlegung in welchen Bereichen der Dekorpapierlage oder der Overlaypapierlage, welche Menge Harz pro Fläche aufgetragen wird, wird erfindungsgemäß durch die digitalen Daten der Datei für die Oberflächenstruktur vorgegeben. Da die Datei für die Oberflächenstruktur die Oberflächenstruktur des Dekors in digitaler Form und damit für jeden Bildpunkt des Dekors zugeordnet eine Strukturtiefe enthält, ist die Menge des Auftrages der mindestens einen Harzschicht genau auf das Dekor abgestimmt. In Bereichen in denen später Erhebungen im mit dem Dekor versehenen Trägermaterial vorhanden sein sollen, wird eine größere Menge Harz pro Fläche aufgetragen als in Bereichen mit flacheren Strukturen oder ohne Struktur.

In einer bevorzugten Ausführungsform der vorliegenden Erfindung werden Markierungen auf der Dekorpapierlage genutzt, um das Auftragen der mindestens einen Harzschicht auf die Dekorpapierlage oder die Overlaypapierlage in Synchronität zum Dekor der Dekorpapierlage zu bringen. Die Markierungen der Dekorpapierlage können durch mindestens einen geeigneten Scanner oder mindesten eine geeignete Kamera im Prozessablauf erkannt werden und entsprechend zur Steuerung der Verfahrensschritte genutzt werden. Die Steuerung des Auftrags der mindestens einen Harzschicht erfolgt über eine geeignete Software. Geeignete Software ist dem Fachmann bekannt.

In einer Ausführungsform wird zur Positionierung der Dekorpapierlage vorteilhafterweise neben dem Abstand der Markierungen in Längsrichtung auch der Abstand der Markierungen in Querrichtung ermittelt.

In einer Ausführungsform werden mehrere Schichten Harz auf die Dekorpapierlage oder die Overlaypapierlage aufgetragen. Es können zwischen 2 und 6 Schichten Harz, bevorzugt zwischen 2 und 5 Schichten Harz, besonders bevorzugt zwischen 2 und 4 Schichten Harz aufgetragen werden. Der Auftrag mehrerer Schichten kann zum Beispiel notwendig sein, wenn Auftragsmengen nicht in einem Durchlauf realisierbar sind. Mehrere Schichten Harz können auch nur in den Bereichen aufgetragen werden, in denen eine größere Menge Harz pro Fläche aufgebracht werden soll im Vergleich zu umgebenden Bereichen.

Nach dem Auftragen der mindestens einen Harzschicht kann diese in einer Ausführungsform angetrocknet oder fixiert werden. Hierdurch wird das Verlaufende der Harzschicht verhindert. Werden mehrere Schichten Harz aufgetragen, kann jeweils nach dem Auftrag einer Schicht diese angetrocknet werden.

Das Harz der mindestens einen Harzschicht kann als pulverförmiges Harz und/oder als flüssiges Harz aufgetragen werden. Wird Harzpulver anstatt Flüssigharz verwendet, entfällt das Antrocknen der mindestens einen und jeder weiteren Harzschicht. Hierdurch reduzieren sich Anlagenkosten, Abluftproblematik und Platzbedarf in der Produktionsanlage. Geeignete pulverförmige Harze haben eine Teilchengröße zwischen 20 bis 100 µm, bevorzugt zwischen 40 und 89 µm. Ein pulverförmiges Harz kann beispielsweise über einen Digitaldrucker aufgebracht werden. Die Steuerung des Digitaldruckers, das heißt die Steuerung der Auftragsmenge in Abhängigkeit vom Ort, erfolgt dabei mit Hilfe der digitalen Daten der Datei für die Oberflächenstruktur. Die Auflösung der Auftragsmenge entspricht dann der Auflösung des Digitaldruckers. Die Auflösung der Auftragsmenge beschreibt, wie klein benachbarte Flächen mit voneinander unterschiedlichen Auftragsmengen an Harz sein können. Nach dem Auftrag einer Schicht eines pulverförmigen Harzes kann dieses in einer Ausführungsform, beispielsweise durch einen Infrarot-Strahler (IR-Strahler) fixiert werden.

Wird ein flüssiges Harz für die mindestens eine Harzschicht verwendet, weist dieses bevorzugt einen Feststoffgehalt von über oder gleich 70 Gew.% auf. Durch den Feststoffgehalt wird die Viskosität des flüssigen Harzes beeinflusst, wobei durch einen Feststoffgehalt über oder gleich 70 Gew.% ein Verlaufen des Harzes nach dem Auftrag verhindert wird. In einer Ausführungsform der Erfindung kann das flüssige Harz zusätzlich erwärmt werden, um die Viskosität des Harzes weiter zu erhöhen. Durch das Erwärmen des Harzes wird dieses teilweise, aber nicht vollständig polymerisiert, so dass eine weitergehende Vernetzung bzw. Polymerisierung zu einem späteren Verarbeitungszeitpunkt möglich ist. Ein flüssiges Harz kann beispielsweise durch Düsen aufgebracht werden. Die Steuerung der Düsen, das heißt die Steuerung der Auftragsmenge in Abhängigkeit vom Ort, erfolgt dabei mit Hilfe der digitalen Daten der Datei für die Oberflächenstruktur. Die Auflösung der Auftragsmenge ist dann entsprechend der Auflösung der verwendeten Düsen. Nach dem Auftrag einer flüssigen Harzschicht kann diese mit einem Umlufttrockner/(N)IR-Strahler angetrocknet werden.

Geeignete Harze sind ausgewählt aus der Gruppe aufweisend Melamin-Formaldehydharze.

Das Harz kann weiterhin mindesten ein Additiv und/oder mindestens einen Zuschlagstoff aufweisen. Geeignete Additive sind ausgewählt aus der Gruppe aufweisend Härter, Netzmittel (Tenside oder Mischungen davon) und Trennmittel. Geeignete Zuschlagsstoffe sind ausgewählt aus der Gruppe aufweisend leitfähige Substanzen und Zellulose. Die leitfähigen Substanzen können ausgewählt sein aus der Gruppe enthaltend Ruß, Kohlefasern, Metallpulver und Nanopartikel, insbesondere Kohlenstoffnanoröhren.

Die Auftragsmenge des mindestens einen Harzes liegt erfindungsgemäß abschnittsweise bevorzugt zwischen 100 und 500 g/m² Harz. Dabei können die entsprechenden Mengen Harz, wie bereits beschrieben, auf einmal oder auch in mehreren Schichten aufgebracht werden.

Der Auftrag, der mindestens einen Harzschicht, erfolgt bevorzugt unmittelbar vor dem Verpressen des Schichtstoffes in der CPL-Presse. Dekorpapierlage und Overlaypapierlage werden üblicherweise als Rollenware gelagert. Die Rollenware muss ausreichend straff gewickelt sein, um eine reibungslose Weiterverarbeitung an der CPL-Presse zu ermöglichen. Wird die mindestens eine Harzschicht auf die Overlaypapierlage oder die Dekorpapierlage aufgetragen und anschließend für eine Lagerung aufgewickelt, besteht die Gefahr, dass beim straffen Aufwickeln dieser Lagen die mindestens eine Harzschicht zumindest abschnittweise abgerieben werden könnte. Hierunter würde die Qualität des Schichtstoffes am Ende leiden. Vorteilhafterweise, wird dieses Problem umgangen, da der Auftrag, der mindestens einen Harzschicht, erst unmittelbar vor der CPL-Presse erfolgt und anschließend das Verpressen des Schichtstoffes stattfindet. Zudem wird durch die unmittelbare Weiterverarbeitung ein Verdrecken oder Verstauben der Papierlagen vermieden.

Durch den unmittelbaren Auftrag der mindestens einen Harzschicht vor der CPL-Presse kann zudem kurzfristig auf Dekoränderungen reagiert werden. Das erfindungsgemäße Verfahren ist damit sehr flexibel einsetzbar.

In einem weiteren Verfahrensschritt wird die mindestens eine Kraftpapierlage und die mit einem Dekor bedruckten Dekorpapierlage mit der mindestens einen Harzschicht mit einem Strukturgeber in einer CPL-Presse verpresst.

Alternativ wird die mindestens eine Kraftpapierlage, die mit einem Dekor bedruckten Dekorpapierlage und die Overlaypapierlage mit der mindestens einen Harzschicht mit einem Strukturgeber in einer CPL-Presse verpresst.

Der Schichtaufbau der verpresst wird, kann daher erfindungsgemäß folgenden Aufbau haben:
a) Kernlage - Dekorpapierlage mit mindestens eine Harzschicht;
b) Kernlage - Dekorpapierlage - Overlaypapierlage mit mindestens einer Harzschicht.

Wie bereits beschrieben, wird die Kernlage durch die Kraftpapierlage oder die Kraftpapierlagen gebildet. In jedem Fall wird die Struktur des Strukturgebers durch die digitalen Daten der Datei für die Oberflächenstruktur vorgegeben und wird damit von dem auf die Dekorpapierlage gedruckten Dekor bestimmt.

In einer Ausführungsform wird beim Verpressen ein Schichtaufbau verpresst, bei dem auf der Kernlage die Dekorpapierlage angeordnet ist. Der Strukturgeber ist in der CPL-Presse dann der Dekorpapierlage zu gewandt angeordnet.

In einer weiteren Ausführungsform wird beim Verpressen ein Schichtaufbau verpresst, bei dem auf der Kernlage die Dekorpapierlage und auf dieser die Overlaypapierlage angeordnet ist. Der Strukturgeber ist in der CPL-Presse dann der Overlaypapierlage zu gewandt angeordnet.

Der Strukturgeber kann erfindungsgemäß ein Strukturgeberpapier oder ein strukturiertes Pressblech sein.

Unter einem Strukturgeberpapier ist dabei ein Papier zu verstehen, das nach Auflegen und Verpressen der Oberfläche des Schichtstoffes eine Struktur (z.B. 3D-Struktur) verleiht. Das Strukturgeberpapier hat neben der Strukturierungs- auch eine Schutzfunktion, insbesondere während des Pressschritts. Das Strukturgeberpapier wird nach dem Verpressen des Schichtaufbaus wieder entfernt und kann wiederverwertet werden.

Bei einem strukturierten Pressblech kann die Struktur beispielsweise aus dem Pressblech herausgefräst oder geätzt werden, alternativ ist es auch möglich zusätzliche Materialschichten auf dem Pressblech aufzubringen.

Da die Datei für die Oberflächenstruktur die Oberflächenstruktur des Dekors in digitaler Form und damit für jeden Bildpunkt des Dekors zugeordnet eine Strukturtiefe enthält, kann anhand dieser Datei die Struktur des Strukturträgers für das Dekor genau vorgegeben werden.

Für die Ausbildung einer Fugenstruktur bei einem Fliesendekor können beispielsweise Trapeze oder ähnliche Körper auf dem Strukturgeber ausgebildet sein, um die gewünschte Struktur hervorzurufen. Selbstverständlich können durch entsprechend produzierte Strukturgeber alle möglichen Geometrien realisiert werden, welche Strukturen von Ornamenten, Schriftzügen, Ästen, Poren, simulierten Benutzungsspuren oder andere Dekorstrukturen entsprechen. Prinzipiell ist jede dem Fachmann vertraute Technik einsetzbar, um den Strukturgeber mit der durch die digitalen Daten der Datei für die Oberflächenstruktur vorgegebenen Struktur zu versehen.

Der Pressschritt in der Presse (CPL - Presse) wird bei einem angelegten Pressdruck zwischen 50 - 90 kg/cm² und einer Temperatur zwischen 150 und 200 °C, bevorzugt 180°C, durchgeführt. Die Anlagengeschwindigkeit der Pressanlage beträgt 5 - 20 m/min, bevorzugt 8 bis 18 m/min. Das in der Presse hergestellte Schichtstoff weist eine Dicke zwischen 0,25 - 1,2 mm auf. Pressdruck, Anlagengeschwindigkeit und Temperatur werden bevorzugt über die gleiche Software gesteuert, wie der Auftrag der mindestens einen Harzschicht.

Erfindungsgemäß wird eine Oberflächenstruktur auf dem Schichtstoff ausgebildet, die synchron zu dem auf der Dekorpapierlage aufgedruckten Dekor ist. Die Positionierung des Strukturgebers in der CPL-Presse wird bevorzugt ebenfalls über die gleiche Software gesteuert wie der Auftrag der mindestens einen Harzschicht. Durch die Markierungen auf der Dekorpapierlage kann analog wie für den Auftrag der mindestens einen Harzschicht bereits beschrieben eine dekorsynchrone Positionierung des Strukturgebers erfolgen.

Nach dem Harzauftrag und vor dem Verpressen, sind erfindungsgemäß die Kernlage, die Dekorpapierlag und der Strukturgeber oder die Kernlage, die Dekorpapierlage und die Overlaypapierlage und der Strukturgeber zueinander so positioniert, dass Dekor und Struktur des Strukturgebers zueinander deckungsgleich, d.h. synchron sind.

Vorteilhaft ist, dass Papierwachstum, welches durch die Imprägnierung der Dekorpapierlage oder der Overlaypapierlage erfolgen kann, durch die Berücksichtigung der Markierungen auf der Dekorpapierlage beim Auftrag der mindestens einen Harzschicht und auch bei der Positionierung des Strukturträgers in der Presse immer exakt berücksichtigt werden kann. In Stand der Technik Verfahren werden hierfür lediglich berechnete Durchschnittswerte verwendet, anhand derer die Position des Strukturträgers angeglichen wird. Durch diese Maßnahme ist es möglich, die Qualität des dekorsynchronen Aufbringens der Struktur auf einen Schichtstoff weiter zu erhöhen.

Beim Verpressen strukturiert der Strukturgeber dann den Schichtaufbau, wobei ein Teil der Strukturhöhe aus dem Auftrag der mindestens einen Harzschicht entsteht. Damit wird eine Strukturierung auf dem Schichtstoff erzeugt, die auch in einem größeren Betrachtungsabstand, z.B. aufrecht auf einem Bodenbelag stehend, wahrgenommen wird. Die Strukturierung des Schichtstoffes wird dabei in der mindestens einen Harzschicht erzeugt und reicht zumindest abschnittsweise bis in die Kernlage hinein. Es können auf diese Weise Strukturtiefen ausgebildet werden, die durch die Auftragsmenge der mindestens einen Harzschicht und die Struktur des Strukturgebers bestimmt werden. Bei der Ausbildung der Strukturen auf dem Schichtstoff gemäß der vorliegenden Erfindung, entsteht in einer bevorzugten Ausführungsform abschnittsweise die Strukturierung auf dem Schichtstoff durch
(1) die Strukturierung der Dekorpapierlage oder die Strukturierung der Kernlage und der Dekorpapierlage; oder
(2) die Strukturierung der Overlaypapierlage; oder die Strukturierung der Dekorpapierlage und der Overlaypapierlage; oder die Strukturierung der Kernlage, der Dekorpapierlage und der Overlaypapierlage
und abschnittsweise durch die Strukturierung der mindestens einen Harzschicht.

Erfindungsgemäß ist es daher möglich sowohl positive als auch negative Strukturen auf dem Schichtstoff auszubilden.

Weist der Schichtstoff eine Kernlage und eine imprägnierte Dekorpapierlage auf, so wird eine Nulllinie auf der Oberseite der imprägnierten Dekorpapierlage nach dem Verpressen festgelegt. Die Oberseite beschreibt dabei die von der Kernlage abgewandte Seite der imprägnierten Dekorpapierlage. Die Nulllinie ergibt sich als Oberseite der ausgehärteten imprägnierten Dekorpapierlage nach dem Verpressen des Schichtstoffes, wobei auf die imprägnierte Dekorpapierlage keine weitere Harzschicht aufgetragen wurde und wobei beim Verpressen kein Strukturträger mit einer Struktur verwendet wurde. Alle Strukturen, die von dieser Nulllinie aus aufragen werden als positive Strukturen bezeichnet. Positive Strukturen werden daher ausschließlich durch die mindestens eine Harzschicht gebildet. Alle Strukturen, die von der Nulllinie aus gesehen in den Schichtstoff hineinragen werden als negative Strukturen bezeichnet. Negative Strukturen entstehen durch die Strukturierung der Dekorpapierlage oder der Kernlage und der Dekorpapierlage.

Weist der Schichtstoff eine Kernlage, eine imprägnierte Dekorpapierlage und eine imprägnierte Overlaypapierlage auf, so wird eine Nulllinie auf der Oberseite der imprägnierten Overlaypapierlage festgelegt. Die Oberseite beschreibt dabei die von der Dekorpapierlage abgewandte Seite der Overlaypapierlage. Die Nulllinie ergibt sich als Oberseite der ausgehärteten imprägnierten Overlaypapierlage nach dem Verpressen des Schichtstoffes, wobei auf die imprägnierte Overlaypapierlage keine weitere Harzschicht aufgetragen wurde und wobei beim Verpressen kein Strukturträger mit einer Struktur verwendet wurde. Alle Strukturen, die von dieser Nulllinie aus aufragen werden als positive Strukturen bezeichnet. Positive Strukturen werden daher ausschließlich durch die mindestens eine Harzschicht gebildet. Alle Strukturen, die von der Nulllinie aus gesehen in den Schichtstoff hineinragen werden als negative Strukturen bezeichnet. Negative Strukturen entstehen durch die Strukturierung
- der Overlaypapierlage oder
- der Overlaypapierlage und der Dekorpapierlage oder
- der Kernlage, der Dekorpapierlage und der Overlaypapierlage.

Der Betrag von der größten positiven Struktur zur größten negativen Struktur gibt die maximale Strukturtiefe an.

Erfindungsgemäß kann eine Oberflächenstruktur mit einer maximalen Strukturtiefe größer gleich 100 µm, bevorzugt größer gleich 150 µm, besonders bevorzugt größer gleich 200 µm auf dem Schichtstoff ausgebildet werden.

Die mit dem erfindungsgemäßen Verfahren ausgebildeten Strukturen erzeugen damit nicht nur einen optischen Eindruck einer Struktur, sondern auch einen haptischen Eindruck. Strukturen mit einer solchen Strukturtiefe konnten bisher mit den Verfahren aus dem Stand der Technik gar nicht oder nur unter hohem Kostenaufwand (3D-Druck, Auftrag von Lackschichten) erzeugt werden. Beim Auftrag von Lackschichten sei darauf verwiesen, dass solche Lackschichten in mehreren Lagen aufgetragen und/oder gehärtet werden müssten, was enorm arbeitsaufwendig und damit unwirtschaftlich ist. Darüber hinaus sind Lacke deutlich preisintensiver als die im erfindungsgemäßen Verfahren vorgeschlagenen Harze. Das erfindungsgemäße Verfahren kann in bereits bestehende Fertigungsprozesse eingebunden werden, was die Kosteneffizienz erhöht.

Weiterhin umfasst die vorliegende Erfindung eine Vorrichtung zum Aufbringen eines einer dekorsynchronen Oberflächenstruktur auf einen Schichtstoff mit dem erfindungsgemäßen Verfahren, aufweisend
mindestens eine Kamera und/oder mindestens einen Scanner;
ein Mittel zum Erstellen einer Datei für die Oberflächenstruktur aus den digitalen Bilddaten des Dekors;
mindestens eine Auftragsvorrichtung zum Auftragen der mindestens einen Harzschicht;
optional eine Vorrichtung zum Antrocknen einer aufgetragenen Harzschicht;
ein Mittel zum Verpressen der mindestens einen Harzschicht mit der Kernlage und der Dekorpapierlage mit einem Strukturträger oder der mindestens einen Harzschicht mit der Kernlage, der Dekorpapierlage und der Overlaypapierlage mit einem Strukturgeber;
dadurch gekennzeichnet, dass der Strukturgeber eine Struktur aufweist, die durch die digitalen Daten der Datei für die Oberflächenstruktur vorgegeben ist.

Die Merkmale des erfindungsgemäßen Verfahrens treffen auch auf die erfindungsgemäße Vorrichtung zu und umgekehrt.

Die Vorrichtung umfasst mindestens eine Kamera und/oder mindestens einen Scanner, mit dessen Hilfe Markierungen auf der Dekorpapierlage erkannt werden können, um den Auftrag der mindestens einen Harzschicht so zu steuern, dass der Harzauftrag dekorsynchron erfolgt.

Weiterhin dient die mindestens eine Kamera und/oder der mindestens einen Scanner dazu Markierungen auf der Dekorpapierlage zu erkennen, um die Kernlage, die Dekorpapierlag und den Strukturgeber oder die Kernlage, die Dekorpapierlage, die Overlaypapierlage und den Strukturgeber zueinander so zu positionieren, dass Dekor und Struktur des Strukturgebers zueinander deckungsgleich, d.h. synchron sind.

In einer Ausführungsform kann anstatt einer Kamera und/oder eines Scanners auch ein Kamerasystem und/oder ein Scannersystem verwendet werden.

Als Mittel zum Erstellen einer Datei für die Oberflächenstruktur, enthaltend die digitalen Daten der Oberflächenstruktur des Dekors, aus den digitalen Bilddaten des Dekors eignet sich eine Recheneinheit, dies kann ein PC, ein Tablet oder ein anderweitiges Endgerät sein, auf dem eine geeignete Computersoftware installiert ist. Die Recheneinheit kann gleichzeitig dazu verwendet werden, sämtliche Schritte des Verfahrens zu steuern.

Die mindestens eine Auftragsvorrichtung zum Auftragen der mindestens einen Harzschicht kann, wie bereits beschrieben ein Digitaldrucker oder eine Vorrichtung mit Düsen sein, wobei die Auftragsvorrichtung in einer Ausführungsform eine Recheneinheit aufweist oder in Verbindung zu einer Recheneinheit steht, welche eine Computersoftware aufweist, welche die Auftragsmenge des Harzes in Abhängigkeit vom Ort steuert.

In einer Ausführungsform weist die Vorrichtung eine Vorrichtung zum Antrocknen einer aufgetragenen Harzschicht auf. Geeignete Vorrichtungen sind beispielsweise Infrarot-Strahler ((N)IR-Strahler) oder Umlufttrockner.

Weiterhin umfasst die Vorrichtung ein Mittel zum Verpressen des Schichtstoffes mit einem Strukturgeber. Besonders bevorzugt ist dieses Mittel eine CPL-Presse. Der in der Pressvorrichtung verwendete Strukturgeber weist erfindungsgemäß eine Struktur auf, die durch die digitalen Daten der Datei für die Oberflächenstruktur vorgegeben ist.

Der Strukturgeber ist ausgewählt aus der Gruppe aufweisen Strukturgeberpapier und Pressblech.

Durch das erfindungsgemäße Verfahren und die erfindungsgemäße Vorrichtung ist es möglich, ohne Investitionen auf bereits vorhandenen Produktionsstraßen zu arbeiten. In bereits bestehende und etablierte Fertigungsprozesse wird dabei nur marginal eingegriffen. Darüber hinaus kann auf bereits in der Produktion vorhandene Rohstoffe zurückgegriffen werden. Die Oberflächenstruktur wird im Wesentlichen durch den Auftrag der mindestens einen Harzschicht und die Nutzung geeigneter Strukturgeber ermöglicht. Geeignete Harze sind kostengünstig zu erhalten, womit die Wirtschaftlichkeit des Verfahrens gesteigert wird.

In einer Ausführungsform kann der mit dem erfindungsgemäßen Verfahren hergestellte Schichtstoff als Laminat bei der Herstellung von Möbelfronten, Türblättern, Arbeitsplatten, Zahltheken oder Laminatböden verwendet werden.

Die Erfindung wird im Folgenden durch 2 Figuren und 4 Ausführungsbeispiele näher erläutert.
- Figur 1: stellt einen erfindungsgemäßen Schichtstoff mit einer Kernlage und einer Dekorpapierlage dar.
- Figur 2: stellt einen erfindungsgemäßen Schichtstoff mit einer Kernlage, einer Dekorpapierlage und einer Overlaypapierlage dar

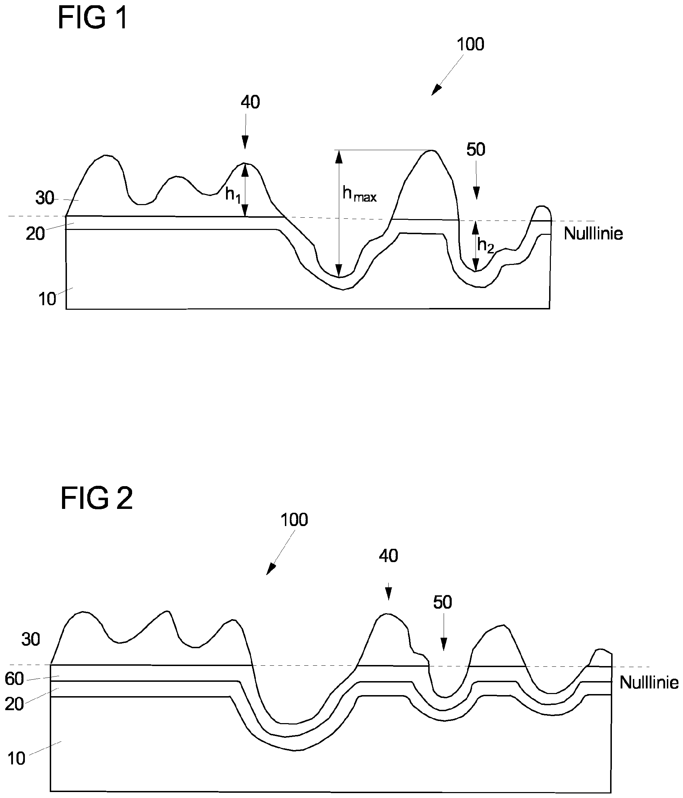

**Figur 1** zeigt einen Schichtstoff 100 nach dem Verpressen. Auf der Kernlage 10 ist eine Dekorpapierlage 20 angeordnet. Auf der Dekorpapierlage 20 wurde eine Harzschicht 30 aufgebracht. Durch das Verpressen mit einem Strukturträger entstanden positive 40 und negative Strukturen 50 auf dem Schichtstoff 100. In der Figur ist weiterhin die Nulllinie gekennzeichnet. Strukturen, die über diese Nulllinie hinausragen sind positive Strukturen 40 und Strukturen, die von der Nulllinie in den Schichtstoff hineinragen sind negative Strukturen 50. Die Höhen bzw. Tiefen der positiven und negativen Strukturen bemessen sich jeweils ab der Nulllinie und sind in der Figur beispielhaft mit h₁ für eine positive Struktur und h₂ für eine negative Struktur gekennzeichnet. Die maximale Strukturtiefe hₘₐₓ ergibt sich als Betrag zwischen der größten positiven Struktur 40 und der größten negativen Struktur 50.

**Figur 2** zeigt einen Schichtstoff 100 nach dem Verpressen. Auf der Kernlage 10 ist eine Dekorpapierlage 20 und eine Overlaypapierlage 60 angeordnet. Auf der Overlaypapierlage 20 wurde eine Harzschicht 30 aufgebracht. Durch das Verpressen mit einem Strukturträger entstanden positive 40 und negative Strukturen 50 auf dem Schichtstoff 100. In der Figur ist weiterhin die Nulllinie gekennzeichnet. Strukturen, die über diese Nulllinie hinausragen sind positive Strukturen 40 und Strukturen, die von der Nulllinie in den Schichtstoff hineinragen sind negative Strukturen 50. Die Höhen bzw. Tiefen der positiven und negativen Strukturen bemessen sich ab der eingezeichneten Nulllinie analog zur Figur 1.

### Ausführungsbeispiel 1 - vertikale Anwendung, z.B. Möbelfronten, Türblätter

An einer CPL-Anlage wurden zwei Natronkraftpapiere NKP (mit einem Gemisch aus Melamin- und Phenolharz im Verhältnis 2:3 getränkt, Papiergewicht: 165g/m², Harzauftrag beim Imprägnieren: 85 Gew%, VC-Wert: 6,0 Gew% (VC = Volatile Components)) und eine Dekorpapierlage (Dekor: Pinie, Papiergewicht: 70g/m², Harzauftrag beim Imprägnieren: 110 Gew% (Melaminharz), VC-Wert: 6,0 Gew% (VC = Volatile Components)) von Rollen abgewickelt (Aufbau von unten nach oben). Die zwei Natronkraftpapiere NKP bildeten die Kernlage des Schichtstoffes und waren auf einer Rolle gewickelt. Das Dekor war mit Hilfe eines Digitaldruckers auf die Dekorpapierlage aufgebracht worden, womit eine Datei zur Verfügung stand, die die digitalen Daten des Dekors enthielt. Aus den digitalen Daten des Dekors wurde eine Datei für eine Oberflächenstruktur erstellt. Auf der Dekorpapierlage befanden sich Markierungen, die von einem Scanner gelesen werden konnten. Unmittelbar vor der Presse wurde mit Hilfe einer Streuvorrichtung ein Melaminharz auf die Dekorpapierlage aufgestreut. Die Streuung lag bei 100 g Melaminharz/m². An den Stellen, an denen sich beim Dekor die Holzporen befanden, wurde, über eine Software gesteuert, kein Melaminharz gestreut.

Dieser Aufbau wurde mit einem dekorsynchronen Strukturgeber auf der Oberseite mit einer Geschwindigkeit von 9,5 m/min durch eine CPL-Presse gefahren. Der Strukturgeber erzeugte an den Stellen, an denen sich die Holzmaserung befand, Vertiefungen. Dabei wurde die Geschwindigkeit der Presse und die Positionierung des Strukturgebers von der gleichen Software gesteuert mit deren Hilfe der Auftrag der Harzschicht erfolgte. Die Presstemperatur lag bei 180°C, der Pressdruck bei 80 kg/cm². Der resultierende Schichtstoff zeigte eine dekorsynchrone Struktur. Die maximale Strukturtiefe lag bei ca. 200 µm. Das Produkt wird als Laminat für Möbelfronten und Türblätter eingesetzt.

### Ausführungsbeispiel 2 - vertikale Anwendung, z.B. Frontelemente

An einer CPL-Anlage wurden zwei NKP (mit einem Gemisch aus Melamin- und Phenolharz im Verhältnis 2:3 getränkt, Papiergewicht: 165g/m², Harzauftrag beim Imprägnieren: 85 Gew.%, VC-Wert: 6,0 Gew.%), eine Dekorpapierlage (Dekor: Rahmen (schwarz) für Frontelement (weiß) ca. 2 cm breit, Papiergewicht: 70g/m², Harzauftrag beim Imprägnieren: 110 Gew.%, VC-Wert: 6,0 Gew.%) und eine Overlaypapierlage (Papiergewicht: 25 g/m² , Harzauftrag beim Imprägnieren: 400 Gew.% (Melaminharz), VC-Wert: 6,3 Gew.%) von Rollen abgewickelt ( Aufbau von unten nach oben). Die zwei Natronkraftpapiere NKP bildeten die Kernlage des Schichtstoffes und waren auf einer Rolle gewickelt. Das Dekor war mit Hilfe eines Digitaldruckers auf die Dekorpapierlage aufgebracht worden, womit eine Datei zur Verfügung stand, die die digitalen Daten des Dekors enthielt. Aus den digitalen Daten des Dekors wurde eine Datei für eine Oberflächenstruktur erstellt. Auf der Dekorpapierlage befanden sich Markierungen, die von einem Scanner gelesen werden konnten. Mit Hilfe der Markierungen konnten die Dekorpapierlage und die Overlaypapierlage so positioniert werden, dass ein dekorsynchroner Auftrag der ersten Harzschicht auf die Overlaypapierlage möglich war. Unmittelbar vor der Presse wurde hierfür mit Hilfe einer Streuvorrichtung ein Melaminharz auf das Overlaypapierlage aufgestreut. Die Streuung lag bei 100 g Melaminharz/m². Die Streuung erfolgte an den Stellen, an denen sich beim Dekor die Rahmen befanden und wurde über eine Software gesteuert.

Dieser Aufbau wurde mit einem dekorsynchronen Strukturgeber mit einer Geschwindigkeit von 9,5 m/min durch eine CPL-Presse gefahren. Der Strukturgeber erzeugte an den Stellen, an denen sich die Holzmaserung befand, Erhöhungen. Dabei wurde die Geschwindigkeit der Presse und die Positionierung des Strukturgebers von der gleichen Software gesteuert mit deren Hilfe der Auftrag der Harzschicht erfolgte. Die Presstemperatur lag bei 180°C, der Pressdruck bei 90 kg/cm². Der resultierende Schichtstoff zeigte eine dekorsynchrone Struktur. Die maximale Strukturhöhe lag bei ca. 280 µm. Das Produkt wird als Laminat für Frontelemente verwendet.

### Ausführungsbeispiel 3 - horizontale Anwendung, z.B. Zahltheken, Arbeitsplatten

An einer CPL-Anlage wurden vier NKP (mit einem Gemisch aus Melamin- und Phenolharz im Verhältnis 2:3 getränkt, Papiergewicht: 165 g/m², Harzauftrag beim Imprägnieren: 85 Gew.%, VC-Wert: 6,0 Gew.%), eine Dekorpapierlage (Dekor: Steindekor, Papiergewicht: 70g/m², Harzauftrag beim Imprägnieren: 110 Gew.%, VC-Wert: 6,0 Gew.%) und eine Overlaypapierlage (Papiergewicht: 25 g/m² , Harzauftrag beim Imprägnieren: 400 Gew.% (Melaminharz), VC-Wert: 6,3 Gew.%) von Rollen abgewickelt (Aufbau von unten nach oben). Die vier Natronkraftpapiere NKP bildeten die Kernlage des Schichtstoffes und waren auf einer Rolle gewickelt. Das Dekor war mit Hilfe eines Digitaldruckers auf die Dekorpapierlage aufgebracht worden, womit eine Datei zur Verfügung stand, die die digitalen Daten des Dekors enthielt. Aus den digitalen Daten des Dekors wurde eine Datei für eine Oberflächenstruktur erstellt.

Auf der Dekorpapierlage befanden sich Markierungen, die von einem Scanner gelesen werden konnten. Mit Hilfe der Markierungen konnten die Dekorpapierlage und die Overlaypapierlage so positioniert werden, dass ein dekorsynchroner Auftrag der ersten Harzschicht auf die Overlaypapierlage möglich war. Unmittelbar vor der Presse wurde dafür mit Hilfe einer Streuvorrichtung ein Melaminharz auf die Overlaypapierlage aufgestreut. Die Streuung lag bei 100 g Melaminharz/m². Die Streuung erfolgte an den Stellen an denen im Steindekor später Erhebungen sein sollten und wurde über eine Software gesteuert.

Dieser Aufbau wurde mit einem dekorsynchronen Strukturgeber auf der Oberseite mit einer Geschwindigkeit von 9,5 m/min durch die Anlage gefahren. Der Strukturgeber erzeugte an den Stellen, an denen sich die Steinstruktur befand, Vertiefungen. Dabei wurde die Geschwindigkeit der Presse und die Positionierung des Strukturgebers von der gleichen Software gesteuert mit deren Hilfe der Auftrag der Harzschicht erfolgte. Die Presstemperatur lag bei 180°C, der Pressdruck bei 80 kg/cm². Der resultierende Schichtstoff zeigte eine dekorsynchrone Struktur. Die maximale Strukturhöhe lag bei ca. 220 µm. Das Produkt wird als Laminat für Zahltheken und Arbeitsplatten eingesetzt.

### Ausführungsbeispiel 4 - horizontale Anwendung z.B. Laminatböden

An einer CPL-Anlage wurden vier NKP (mit einem Gemisch aus Melamin- und Phenolharz im Verhältnis 2:3 getränkt, Papiergewicht: 165g/m², Harzauftrag beim Imprägnieren: 85 Gew.%, VC-Wert: 6,0 Gew.%), eine Dekorpapierlage (Dekor: Pinie, Papiergewicht: 70g/m², Harzauftrag beim Imprägnieren: 110 Gew.%, VC-Wert: 6,0 Gew.%) und eine Overlaypapierlage (Papiergewicht: 25 g/m² , Harzauftrag beim Imprägnieren: 400 Gew.% (Melaminharz), VC-Wert: 6,3 Gew.%) von Rollen abgewickelt (Aufbau von unten nach oben). Die vier Natronkraftpapiere NKP bildeten die Kernlage des Schichtstoffes und waren auf einer Rolle gewickelt. Das Dekor war mit Hilfe eines Digitaldruckers auf das Dekorpapier aufgebracht worden, womit eine Datei zur Verfügung stand, die die digitalen Daten des Dekors enthielt. Aus den digitalen Daten des Dekors wurde eine Datei für eine Oberflächenstruktur erstellt.

Auf der Dekorpapierlage befanden sich Markierungen, die von einem Scanner gelesen werden konnten. Mit Hilfe der Markierungen konnten die Dekorpapierlage und die Overlaypapierlage so positioniert werden, dass ein dekorsynchroner Auftrag der ersten Harzschicht auf die Overlaypapierlage möglich war. Unmittelbar vor der Presse wurde dafür mit Hilfe einer Streuvorrichtung ein Melaminharz auf die Overlaypapierlage aufgestreut. Die Streuung lag bei 100 g Melaminharz/m². Die Streuung erfolgte an den Stellen, an denen sich beim Dekor keine Holzporen befanden und wurde über eine Software gesteuert.

Dieser Aufbau wurde mit einem dekorsynchronen Strukturgeber auf der Oberseite mit einer Geschwindigkeit von 9,5 m/min durch eine CPL-Presse gefahren. Der Strukturgeber erzeugte an den Stellen, an denen sich die Holzmaserung befand, Erhöhungen. Dabei wurde die Geschwindigkeit der Presse und die Positionierung des Strukturgebers von der gleichen Software gesteuert mit deren Hilfe der Auftrag der Harzschicht erfolgte. Die Presstemperatur lag bei 180°C, der Pressdruck bei 80 kg/cm². Der resultierende Schichtstoff zeigte eine dekorsynchrone Struktur. Die Strukturhöhe lag bei ca. 150 µm. Das Produkt wird für Laminatböden eingesetzt.

### Bezugszeichenliste

- 10: Kernlage
- 20: Dekorpapierlage
- 30: Harzschicht
- 40: positive Struktur
- 50: negative Struktur
- 60: Overlaypapierlage
- 100: Schichtstoff

## Patentansprüche

1. Verfahren zur Herstellung eines Schichtstoffes (100), insbesondere eines Laminates in einer CPL-Presse mit einer zu einem Dekor synchronen Struktur, aufweisend die folgenden Schritte:
a.
(i) Bereitstellen mindestens einer Kraftpapierlage und einer mit einem Dekor bedruckten Dekorpapierlage (20); oder
(ii) Bereitstellen mindestens einer Kraftpapierlage, einer mit einem Dekor bedruckten Dekorpapierlage (20) und einer Overlaypapierlage (60);
b. Bereitstellen einer Datei aufweisend die digitalen Daten des Dekors, mit dem die Dekorpapierlage (20) bedruckt ist;
c. Erstellen einer Datei für die Oberflächenstruktur, enthaltend die digitalen Daten der Oberflächenstruktur des Dekors, aus der Datei aufweisend die digitalen Daten des Dekors;
d. Auftragen mindestens einer Schicht Harz (30) auf die bedruckte Dekorpapierlage (20) im Fall a. (i); oder
Auftragen mindestens einer Schicht Harz (30) auf die Overlaypapierlage (60) im Fall a. (ii);
wobei in jedem Fall die Verteilung des Harzes (30) durch die digitalen Daten der Datei für die Oberflächenstruktur vorgegeben wird und damit von dem auf die Dekorpapierlage aufgedrucktem Dekor abhängt;
e. Verpressen der mindestens einen Kraftpapierlage und der mit einem Dekor bedruckten Dekorpapierlage (20) mit der mindestens einen Harzschicht (30) mit einem Strukturgeber in einer CPL-Presse; oder
Verpressen der mindestens einen Kraftpapierlage, der mit einem Dekor bedruckten Dekorpapierlage (20) und der Overlaypapierlage (60) mit der mindestens einen Harzschicht (30) mit einem Strukturgeber in einer CPL-Presse;
wobei in jedem Fall die Struktur des Strukturgebers durch die digitalen Daten der Datei für die Oberflächenstruktur vorgegeben wird und damit von dem auf die Dekorpapierlage (20) gedruckten Dekor bestimmt wird;
wobei eine Oberflächenstruktur auf dem Schichtstoff (100) ausgebildet wird, die synchron zu dem auf der Dekorpapierlage (20) aufgedruckten Dekor ist; und
wobei ein Teil der Strukturhöhe der Oberflächenstruktur aus dem Auftrag der mindestens einen Harzschicht (30) entsteht.

2. Verfahren gemäß Anspruch 1, **dadurch gekennzeichnet, dass** eine Oberflächenstruktur mit einer maximalen Strukturtiefe ≥ 100 µm, bevorzugt ≥ 150µm, besonders bevorzugt ≥ 200 µm entsteht.

3. Verfahren gemäß einem der vorangegangenen Ansprüche, **dadurch gekennzeichnet, dass** mehrere Schichten Harz (30) auf die Dekorpapierlage (20) oder die Overlaypapierlage (60) im Verfahrensschritt d. aufgetragen werden.

4. Verfahren gemäß einem der vorangegangenen Ansprüche, **dadurch gekennzeichnet, dass** pulverförmiges und/oder flüssiges Harz aufgetragen wird.

5. Verfahren gemäß einem der vorangegangenen Ansprüche, **dadurch gekennzeichnet, dass** das Harz ausgewählt ist aus der Gruppe aufweisend Melamin-Formaldehydharze.

6. Verfahren gemäß einem der vorangegangenen Ansprüche, **dadurch gekennzeichnet, dass** das flüssige Harz mit einem Feststoffgehalt von über 70 % aufgetragen wird.

7. Verfahren gemäß einem der vorangegangenen Ansprüche, **dadurch gekennzeichnet, dass** das Harz mindestens ein Additiv und/oder Zuschlagstoffe aufweist.

8. Verfahren gemäß Anspruch 7, **dadurch gekennzeichnet, dass** das mindestens ein Additiv ausgewählt ist aus der Gruppe aufweisend Härter, Netzmittel, Trennmittel und/oder der mindestens einen Zuschlagstoff ausgewählt ist aus der Gruppe aufweisend leitfähige Substanzen und Zellulose.

9. Verfahren gemäß einem der vorangegangenen Ansprüche, **dadurch gekennzeichnet, dass** abschnittsweise zwischen 100 und 500 g/m² Harz aufgetragen werden.

10. Verfahren gemäß einem der vorangegangenen Ansprüche, **dadurch gekennzeichnet, dass** nach dem Auftrag einer Schicht Harz (30) diese angetrocknet oder fixiert wird.

11. Verfahren gemäß einem der vorangegangenen Ansprüche, **dadurch gekennzeichnet, dass** für die mindestens eine Kraftpapierlage ein Natronkraftpapier verwendet wird.

12. Verfahren gemäß einem der vorangegangenen Ansprüche, **dadurch gekennzeichnet, dass** 1 bis 5 Kraftpapierlagen, bevorzugt 1 bis 3 Kraftpapierlagen, besonders bevorzugt 2 bis 3 Kraftpapierlagen zur Verfügung gestellt werden.

13. Vorrichtung zum Aufbringen einer dekorsynchronen Oberflächenstruktur auf einen Schichtstoff (100) mit einem Verfahren, gemäß der Ansprüche 1 bis 12 aufweisend
mindestens eine Kamera und/oder mindestens einen Scanner;
ein Mittel zum Erstellen einer Datei für die Oberflächenstruktur aus den digitalen Bilddaten des Dekors;
mindestens eine Auftragsvorrichtung zum Auftragen der mindestens einen Harzschicht (30);
optional eine Vorrichtung zum Antrocknen einer aufgetragenen Harzschicht;
ein Mittel zum Verpressen der mindestens einen Harzschicht (30) mit der Kernlage und der Dekorpapierlage (20) mit einem Strukturträger oder der mindestens einen Harzschicht (30) mit der Kernlage, der Dekorpapierlage (20) und der Overlaypapierlage (60) mit einem Strukturgeber;
**dadurch gekennzeichnet, dass** der Strukturgeber eine Struktur aufweist, die durch die digitalen Daten der Datei für die Oberflächenstruktur vorgegeben ist.
